# EUROPEAN PATENT SPECIFICATION

(11) **EP 4 446 852 B1**
(45) Date of publication and mention of the grant of the patent: **07.10.2026**
(21) Application number: 23167646.1
(22) Date of filing: 12.04.2023
(51) Int. Cl.: G06F 3/01, G06F 3/04845, G06T 19/20, G06F 30/15, G06F 3/04815, G06F 111/16, G06F 111/18, G06F 30/12

(54) **A SYSTEM AND METHOD FOR TRACKING INTERACTION WITH AN OBJECT IN A VIRTUAL ENVIRONMENT**
SYSTEM UND VERFAHREN ZUR VERFOLGUNG DER INTERAKTION MIT EINEM OBJEKT IN EINER VIRTUELLEN UMGEBUNG
SYSTÈME ET MÉTHODE DE SUIVI D'INTERACTION AVEC UN OBJET DANS UN ENVIRONNEMENT VIRTUEL

(43) Date of publication of application: 16.10.2024
(73) Proprietor: Unvs Unevis Ventures, Lda, 9000-048 Funchal, Madeira (PT)
(72) Inventor: Hänßgen, Mirko, 22769 Paulinenallee 55, Hamburg (DE); Grage, Pierre, 22085 Winterhuder Weg 29, Hamburg (DE)
(74) Representative: Invent Horizon IP

(56) References cited:
- US-A1- 2015 356 207
- US-A1- 2022 114 798

## Description

### Technical Field

The present disclosure relates to tracking of objects in a virtual environment, and more particularly to a system for tracking user interaction with an object in such virtual environment and a related method.

### Background

The use of virtual environments such as virtual reality (VR) or augmented reality (AR) environments are becoming more widespread for a range of applications to provide users with an interactive, immersive as well as an intuitive user experience. The development towards a productivity tool has expanded the use case to encompass areas beyond traditional gaming and social applications, such as a tool for product development and business support. Alongside this development of a growing number of users spending more time utilizing these applications, for leisure or work, lies the increasingly more complex task of mapping out the interactions that occur in the virtual environments to be able to generate tailored user experiences and to allow developers and other invested parties to sustain a further relevant development in the field. Traditional user tracking is however not possible in all situations. For example, in a virtual environment, a user's avatar typically only exists in the virtual world for the duration of the session. Information about who controls this avatar and what IP address this person has is not always available or restricted by data protection laws. US2022/0114798A1 discloses a method for displaying a virtual object in an augmented reality environment and a real environment, comprising generating, by an augmented reality application in a first device, a presentation of the virtual object and a second device within the augmented reality environment. US2015/356207A1 discloses a method for exploring design changes in large computer-aided design models, where checkpoints are created as a user changes components in the model.

### Summary

It is an objective of the disclosure to at least partly overcome one or more of the above-identified limitations of the prior art.

One objective is to provide a facilitated tracking of an object in a virtual environment.

Another objective is to provide an improved and customized user experience for a user interacting with an object in a virtual environment.

One or more of these objectives, and other objectives that may appear from the description below, are at least partly achieved by means of a system for tracking interaction with an object in a virtual environment, and a related method, according to the independent claims, embodiments thereof being defined by the dependent claims.

According to a first aspect a system is provided as set out in the appended set of claims.

According to a second aspect a method is provided as set out in the appended set of claims.

Preferred embodiments are defined by the dependent claims.

Some examples of the disclosure provide for facilitated tracking of an object in a virtual environment.

Some examples of the disclosure provide for an improved and customized user experience for a user interacting with an object in a virtual environment.

Some examples of the disclosure provide for facilitated customization of an object based on user interactions.

Some examples of the disclosure provide for a facilitated characterization of user interaction events.

Some examples of the disclosure provide for an improved characterization of user behavior in a virtual environment.

Some examples of the disclosure provide for a reliable and secure exploitation of an object in a virtual environment.

Some examples of the disclosure provide for determining a trend in the type of manipulation of an object in a virtual environment.

Some examples of the disclosure facilitate determining a configuration of an object in a virtual environment based on user interaction events.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

These and other aspects, features and advantages of which examples of the disclosure are capable of will be apparent and elucidated from the following description of examples of the present disclosure, reference being made to the accompanying schematic drawings, in which;
Fig. 1 shows a schematic illustration of a system for tracking interaction with an object in a virtual environment, according to an example;
Fig. 2 shows a schematic illustration of a system for tracking interaction with an object or a plurality of objects in a virtual environment, according to an example;
Fig. 3 shows a process flow chart in a system for tracking interaction with an object in a virtual environment, according to an example;
Figs. 4a-b show schematic illustrations of a user's different viewpoints towards an object in a virtual environment, according to examples of the disclosure; and
Fig. 5 is a flow chart of a method for tracking interaction with an object in a virtual environment, according to an example.

### Detailed Description

Specific examples of the disclosure will now be described with reference to the accompanying drawings. This disclosure may, however, be embodied in many different forms and should not be construed as limited to the examples set forth herein. The terminology used in the detailed description of the examples illustrated in the accompanying drawings is not intended to be limiting of the disclosure. In the drawings, like numbers refer to like elements.

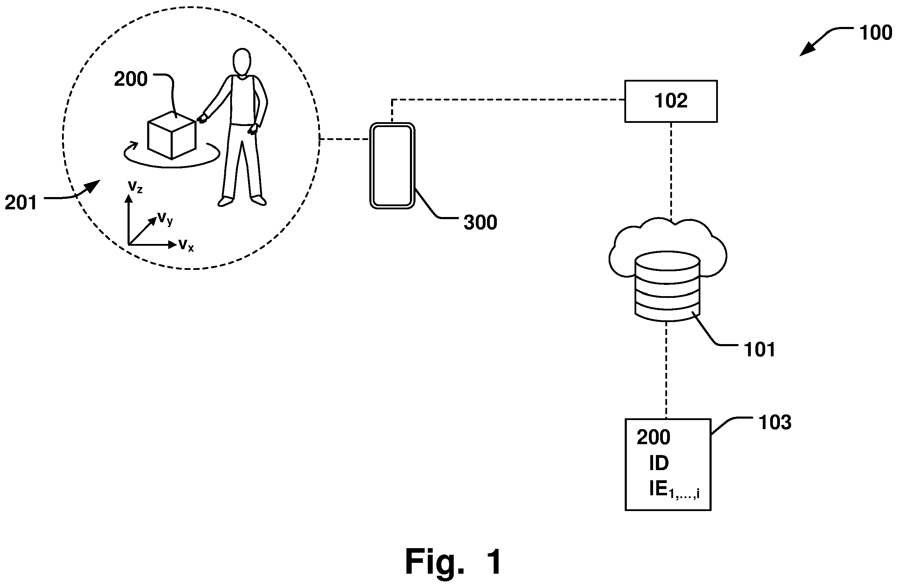

Fig. 1 is a schematic illustration of a system 100 for tracking interaction with an object 200 in a virtual environment 201. The object 200 is viewable by a user in the virtual environment 201 on a user client device 300 The virtual environment 201 is an environment created by a computer and may be any three-dimensional (3D) environment, such as a 3D game or other 3D application viewable on a user client device 300 such as a laptop or a mobile device. The virtual environment 201 may be a virtual reality (VR), an augmented reality (AR), a mixed reality (MR) or other forms of realities (XR), and the user client device 300 may in such case be a headset such as VR googles. The object 200 may be viewable by the user from a first-person perspective, or from any perspective including at least in part a virtual user avatar controllable by the user. The virtual environment 201 may be populated by any plurality of users being connected to a server 207 running the virtual environment 201. The object 200 may be any object 200 in the virtual environment 201 the user can interact with, such as manipulate in any way. The object 200 can thus be seen as a dynamic object 200 which can be altered, e.g. by changing its shape, size, or any other parameter describing its appearance or behavioral characteristics in the virtual environment 201. These parameters describe what is called the configuration of the object 200 for brevity in the present disclosure. The object 200 may be created or destroyed by the user. Reference is made to object 200 for brevity but it should be understood that the user may interact with any plurality of different objects 200 and combinations thereof.

The system 100 comprises a tracking server 101, and a controller 102 in communication with the tracking server 101 and the user client device 300. The controller 102 may comprise a processor and have a wired or wireless connection with the tracking server 101. The controller 102 is configured to generate an identifier (ID) for the object 200, which uniquely identifies the particular object 200, and associate the ID with an asset record 103 for the object 200 on the tracking server 101. Each object 200 may thus have an associated ID and a corresponding asset record 103. As the user explores the virtual environment 201 various interactions with objects 200 may occur, here referred to as interaction events (IE). The controller 102 is thus configured to determine events of the user interacting with an object 200 in the virtual environment 201 as such interaction events, and define the interaction events to be stored in the asset record 103 of the object 200 as the user interacts with the object 200. Accordingly, as the user initiates the interaction with the object 200 in the virtual environment 201 on the user client device 300, and subsequently terminates the interaction, the controller 102 is configured to register a first interaction event with an associated first set of interaction data. The first set of interaction data may be a duration between the initiation of the interaction and the termination of the interaction. Alternatively, or in addition, the first set of interaction data may describe a type of manipulation of the object 200 by the user, such as a change in the appearance of the object 200 or otherwise a change of the object's configuration or properties in the virtual environment 201. The controller 102 is configured to associate the first set of interaction data with the asset record 103 of the object 200 for tracking of the object 200 in the virtual environment 201.

The first set of interaction data is thus directly connected to the unique object 200 in its corresponding asset record 103 following the user's interaction with the object 200. Connecting the interaction events directly to the object 200, and thereby detecting the interactions from the perspective of the object 200, allows for characterizing and mapping out the interactions in the virtual environment 201 without necessarily having details of the user available. Such details may not be available in user sessions where the user explores the virtual environment 200 and sporadically interacts with several objects 200. The tracking server 101 may communicate with a server 207 that owns the objects 200, and has thereby access to the objects 200 for creating the respective asset records 103 and retrieving the interaction data as described above. Being able to retrieve interaction data in such manner allows for customizing and adapting the object 200 for an improved user experience in the virtual environment 201 while safeguarding user integrity. The user may be presented with tailored virtual environment 201 which is continuously adapted to the user's behavior in a facilitated manner while following certain data protection restrictions.

Besides from providing a facilitated customization of objects 200 based on user interactions the system 100 provides for determining trends in the type of manipulation of an object 200 in the virtual environment 201. Developers and other parties invested to provide user experiences in the virtual environment 201 will thus receive feedback on user behavior, such as from a particular user population, via the interaction data uniquely coupled to the particular object 200 and its asset record 103. The determined trends may again be utilized to alter the objects 200 and adapt the virtual environment 201 accordingly for providing increased relevance to the particular user population.

Hence, the controller 102 may be configured to associate a plurality of interaction events (IE₁, _{...,} i), by one or more users interacting with the object 200, and corresponding sets of interaction data with the asset record 103 of the object 200, and determine a trend in the type of manipulation of the object 200 in the plurality of interaction events, and/or a trend in a duration of the plurality of interaction events. The controller 102 may be configured to determine an object configuration correlating with the aforementioned trend.

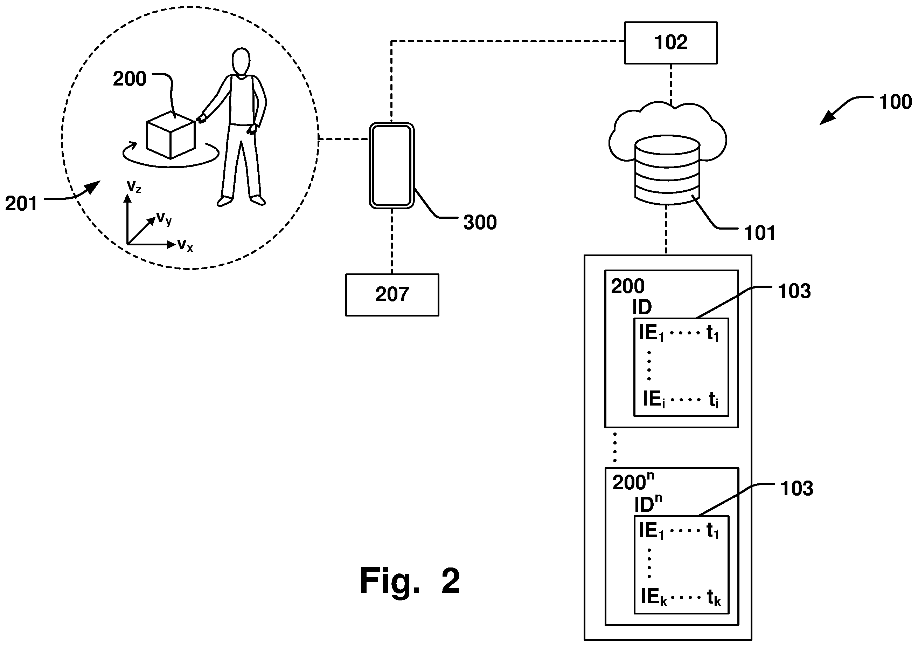

Fig. 1 shows a schematic example of an asset record 103 for an object 200 having an associated identifier (ID). A plurality of interaction events (IE₁, _{..., i}) are registered in the asset record 103. Each interaction event among the plurality of interaction events (IE₁, _{..., i}) has an associated set of interaction data comprising characteristic such as a duration of the interaction or data of how the object 200 has been manipulated by the user. Fig. 2 shows a further example where an asset record 103 has been generated for a respective plurality of different objects 200ⁿ. Interaction events are registered such as IE_{1, ..., k} for the n^{th} object at times t_{1, ..., k}. Any plurality of users may contribute in generating the interaction events for any of the objects 200ⁿ.

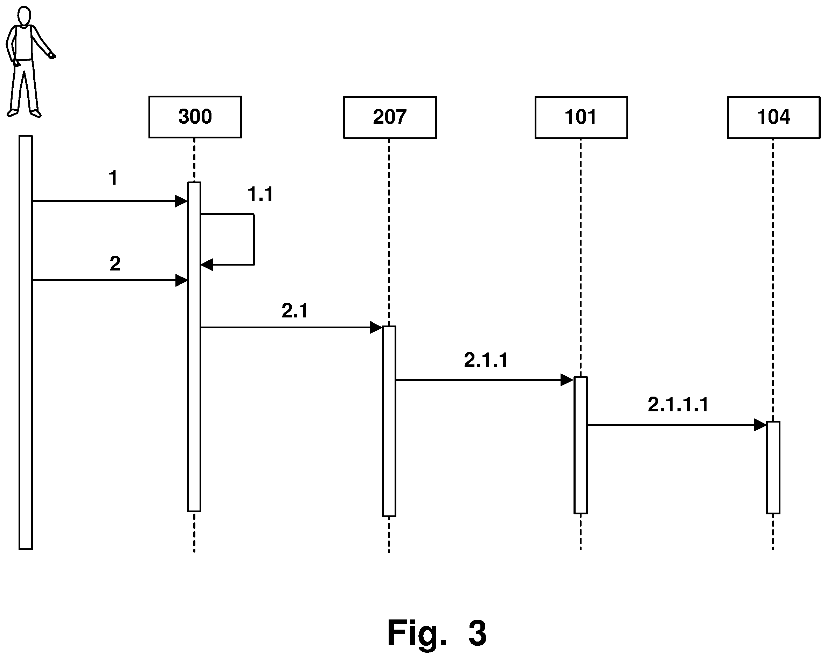

Fig. 3 shows a process flow chart of an example of tracking interaction with an object 200 in the virtual environment 201. The user initiates interaction with the object 200 at (1) via the user client device 300. The initiation of the interaction event is registered for the object 200 at (1.1). Following the user terminating the interaction at (2), the termination of the interaction event is registered for the object 200 and the interaction event may be sent to server 207 with the associated interaction data at (2.1). Server 207 may run the virtual environment via an associated application. The interaction event may be temporarily stored and queued at server 207 and sent via a clocked connection to the tracking server 101 at (2.1.1.). Sending the interaction data via server 207 may be advantageous in some applications to reduce the risk of data manipulation. Further, the interaction data may only be sent if the current object 200 has been sufficiently verified, such as having a valid identifier (ID), and also an associated API code in some instances, to guarantee security. The interaction events may be sent further to a tracking database 104 at (2.1.1.1).

The controller 102 may be configured to alter the configuration of the object 200 based on the first set of interaction data. The object 200 can thus be dynamically adapted depending on how the user interacts with the object 200. For example, the virtual environment 201 may generate a wider range of customization options for an object 200 the user takes particular interest in. This may be the case of interactive objects in different simulators displaying a product which can be manipulated according to the user's liking such as car configurators or other product configurators. The object 200 may be any part of a virtual model of the product generated in the virtual environment 201. The user may interact with certain parts of such virtual model, and the registered interaction data, associated with the aforementioned parts and their corresponding asset records 103, may accordingly reflect to what extent and what type of manipulation is done. A user may for example interact with a virtual interior in a car configurator. A set of interaction data associated with the virtual interior may e.g. indicate that the user takes particular interest of the steering wheel, such as by determining a duration between the initiation of the interaction and the termination of interaction. The controller 102 may be configured to generate a wider range of user customization options for this object 200, i.e. for the steering wheel in this example, in response to the interaction data that has been registered in the asset record 103 of the steering wheel object. Furthermore, the interaction data registered in the asset records 103 of the objects 200 associated with the virtual interior, such as over a course of time when a plurality of users have interacted with the virtual model, can be utilized by the controller 102 to generate instructions for the virtual environment 201 to alter the virtual interior based on the user behavior during such course of time. The system 100 provides for such dynamic adaptation in a facilitated manner, such as without having any details of the users themselves available. Developers and other invested parties will also receive feedback on such user behavior to better adapt the product offerings to the user population.

In one example, the controller 102 may be configured to alter the configuration of the object 200, based on the first set of interaction data, by changing the appearance of the object 200 in the virtual environment 201. E.g. the appearance, such as the shape, color etc, may be changed based on the duration of the interaction event that has been registered in the asset record 103 of the object 200. It is e.g. conceivable that the interaction data in the asset record 103 of the object 200 shows short durations of the interaction events, which may indicate limited interest by users of the current configuration of the object 200, whereupon a new appearance of the object may be presented to the users in the virtual environment 201. Vice versa, the durations may indicate a particular interest in a certain object 200, whereupon the configuration of the object 200 may be more readily updated to maintain the interest amongst users.

The controller 102 may be configured to remove or replace the object 200 based on the first set of interaction data. The interaction data for an object 200 may for example indicate that a trend of reduced interactions with the object 200 among users, and the object 200 may then be removed or replaced with a new object 200.

Objects 200 in the virtual environment 201 may be interconnected in subsets, where the configuration of the different objects 200 in the subset influence eachother. For example, the object 200 referred to above may be a first object and the controller 102 may be configured to alter a configuration of a second object 200', different from the first object 200, based on the first set of interaction data. It is conceivable that the first and second objects 200, 200', may thus be coupled in a hierarchy, where the altering of the first object 200 triggers the altering of the second object 200' higher up in the hierarchy. The interaction data in the asset record 103 of the first object 200 can in one example show that a user has manipulated the first object 200 by changing its appearance, which could include a series of changes of sub-component in a virtual product model, which can trigger altering an enveloping object of the model higher up in the hierarchy. The second object 200' may have a corresponding second asset record on the tracking server 101. The second object 200' may be linked to first object 200 so that the first set of interaction data is further associated with the second asset record. Interaction data which has been registered for the first object 200 may thus also be available in the asset record of the second object 200', thereby allowing the tracking data to be coupled in a hierarchy of objects 200, 200'.

The controller 102 may be configured to alter the user's ability to manipulate the object 200 in a graphical user interface (GUI) of the virtual environment 201 based on the first set of interaction data which has been registered in the asset record 103 of the object 200. The user's GUI may thus be dynamically adapted depending on the interaction data, for example by allowing the user to manipulate finer details of an object 200 if the interaction data indicates the user takes particular interest in the object 200, which may be indicated by a duration of the particular interaction event. The user's configuration abilities may accordingly be dynamically adapted along with the interaction session.

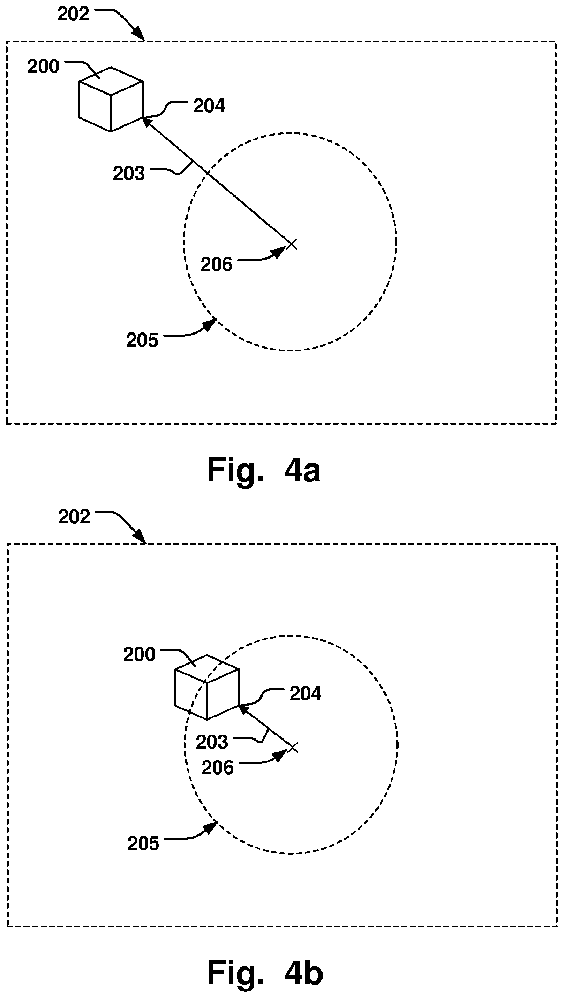

The user may view the object 200 from a viewpoint 202 in the virtual environment 201. Figs. 4a-b are schematic examples of a user's viewpoints 202, i.e. what the user is able to see in the virtual environment 201 at two different instances. An object 200 is displayed at different positions at the aforementioned instances. The viewpoint 202 is continuously updated with frames of the virtual environment 201 which are thus being displayed to the user. The controller 102 may be configured to determine a line of sight 203 to the object 200 in the viewpoint 202 for the frames displayed to the user, and an associated set of line of sight coordinates 204 in the viewpoint 202, as schematically indicated in Figs. 4a-b. The line of sight 203 to the object 200 is continuously changing with the movements of the user and/or the object 200. The controller 102 may be configured to define a focus area 205 in a center 206 of the view point 202, as further exemplified in Figs. 4a-b. The user is more likely to be interested in an object 200 which is within the focus area 205 (Fig. 4b) than close to the outside edges of the viewpoint 202 (Fig. 4a). The controller 102 may be configured to determine a view time by which the line of sight coordinates 204 are positioned at least partly within the focus area 205, as exemplified in Fig. 4b. The first set of interaction data may comprise the view time so that the view time is associated with the asset record 103 of the object 200. The asset record 103 for the object 200 may thus indicate how long the user has kept the object 200 at least partly in the focus area 205 and kept attention to the object 200. For example, the interaction data of a set of objects 200 may indicate that a user has modified the appearance of the same, which then can be followed by characterizing the user's viewing of the modified parts, such as in a virtual product model, to determine which parts, i.e. objects 200, the user takes particular interest in throughout the modification procedure.

The controller 102 may be configured to determine an observable size of the object 200 in relation to a total viewable area from the viewpoint 202. The observable size of the object 200 may thus be a certain percentage of the total area of the viewpoint 202. The first set of interaction data may comprise the observable size so that the observable size is associated with the asset record 103 of the object 200. The asset record 103 for the object 200 may thus indicate how large the object 200 has appeared to the user for the particular interaction event, relative the total viewable area. The observable size is affected by the user's distance to the object 200 and/or of the object 200 is obscured by another object in the virtual environment 201.

The controller 102 may be configured to alter a configuration of the object 200 based on the aforementioned view time and/or the observable size of the object 200. Such further interaction data in the asset record 103 of the object 200 may thus be taken into account to better tailor the object 200 to the user's behavior. The controller 102 may in one example be configured to alter the configuration of the object 200 based on the view time and/or the observable size by changing the appearance of the object 200 in the virtual environment 201. Taking into account both the view time and the observable size may be advantageous in some case, e.g. if the object 200 is positioned at least partly in the focus area 205 but is obscured by another object or positioned far from the user. The controller 102 may also be configured to alter the user's ability to manipulate the object 200 in a GUI of the virtual environment 201 based on the view time and/or the observable size. The user's GUI may thus be dynamically adapted depending on the interaction data, for example by allowing the user to manipulate finer details of an object 200 if the interaction data indicates the user takes particular interest in the object 200, which may be indicated by the view time and/or the observable size.

The controller 102 may be configured to associate the view time with the asset record 103 of the object 200 if a defined time threshold for the view time is met. A certain view time may thus be needed to update the asset record 103 with interaction data comprising the view time. This provides for filtering out and prioritizing the most relevant interaction data of the object 200. The controller 102 may be configured to associate the view time with the asset record 103 of the object 200 if a defined time threshold for the view time is met and/or if a defined observable size threshold for the observable size is met. Thus, the observable size may also be taken into account for providing the most relevant interaction data in the asset record 103.

The controller 102 may be configured to associate a rule set of the object 200 with the asset record 103 of the object 200. The rule set defines limitations for exploitation of the object 200 in the virtual environment 201 such as a total display time of the object 200 and/or how the configuration of the object 200 can be altered. The rule set may thus be construed as rules or license requirements to be complied with on the server level for setting up the virtual environment 201, e.g. on server 207, such as how the object 200 is allowed to be used. In one example the interaction data registered in the asset record 103 of an object 200, e.g. a duration of the interaction events, may be compared to a defined rule set for the object 200, which may include an agreed duration of the interaction time, to determine if there is compliance. It is also conceivable that an initial check of the rule set of the object 200 is carried out, to determine if, and how, the object 200 may be exploited in the virtual environment 201, independently of any subsequently registered interaction data. For example, the period of use of the object 200 and the type of use may be dynamically tracked and matched to agreed terms in the rule set to ensure that irregularities do not occur with the exploitation of the object 200.

The rule set may define a limitation for the type of manipulation of the object 200 by the user or a limitation for a duration of the first interaction event. The rule set in the asset record 102 of the object 200 may thus regulate how the interaction occurs with the object 200 on the user level. The controller 102 may be configured to compare the rule set with the first set of interaction data, to determine whether the duration of the first interaction event satisfies the limitation for the duration. Alternatively, or in addition, the controller 102 may be configured to compare the rule set with the first set of interaction data, to determine whether the type of manipulation in the first interaction event satisfies the limitation for the type of manipulation. A type of manipulation may be modifying the appearance of the object 200. The controller 102 may be configured to alter the object 200, or remove the object 200 from the virtual environment 201, or replace the object 200 in the virtual environment 201, if a limitation in the rule set is not satisfied. For example, the object 200 may be replaced or removed if the duration of the first interaction event, or a total duration of a plurality of interaction events, exceeds a limitation for the duration being defined in the rule set. The rule set may define further terms such as renewal terms. E.g. as an object 200 has been exploited and reached the end of a defined period it may be replaced with other objects 200 that have updated rule sets.

The controller 102 may be configured to continuously compare the limitations of the rule set or license, e.g. via the tracking server 101, to the exploitation of the object 200 in the virtual environment 201. For example, interruption in the communication between tracking server 101 and a server 207 running the virtual environment 201 may trigger removal of the object 200 from the virtual environment 201. This allows for preventing unauthorized use of the object 200.

In some examples the controller 102 is configured to encrypt the object 200 with a key. In such case the object 200 can not be displayed without the key, preventing unauthorized use. The key can be held exclusively by the owner and is only valid as long as the license for the object 200 is valid. Such encryption may ensure that the object 200 and any related sub-sets of objects and components and remain safe and secure, even when used in real-time applications. If the license for the object 200 loses its validity, the object 200 as a whole may no longer be opened or displayed, ensuring that the rule set or license terms are adhered to at all times.

The controller 102 may be configured to retrieve user data of the user and associate the user data with the asset record 103 of the object 200 as the user interacts with the object 200. Information about the user may thus be registered in the asset record 103 in case such information is available to enable further relevant tailoring of the configuration of the object 200 to the user preferences.

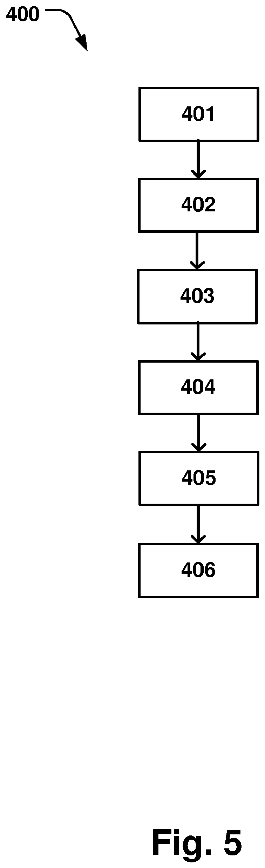

Fig. 5 is a flowchart of a method 400 for tracking interaction with an object 200 in a virtual environment 201. The object 200 is viewable by a user in the virtual environment 201 on a user client device 300. The method 400 comprises generating 401 an identifier (ID) for the object 200 and associating 402 the identifier with an asset record 103 for the object on a tracking server 101. The method 400 comprises determining 403 events of the user interacting with the object 200 in the virtual environment 201 as interaction events (IE). The method 400 comprises defining 404 the interaction events to be stored in the asset record 103 of the object 200 as the user interacts with the object 200. As the user initiates the interaction with the object 200 in the virtual environment 201 on the user client device 300, and subsequently terminates the interaction, the method 400 comprises registering 405 a first interaction event with an associated first set of interaction data such as a duration between the initiation of the interaction and the termination of interaction and/or a type of manipulation of the object 200 by the user, such as a change in the appearance of the object 200. The method 400 comprises associating 406 the first set of interaction data with the asset record 103 of the object 200 for said tracking in the virtual environment 201. The method 400 thus provides for the advantageous benefits as described above in relation to Figs. 1 - 4. The method 400 provides for a facilitated tracking of an object 200 in a virtual environment 201. The method 400 provides for an improved and customized user experience for a user interacting with an object 200 in a virtual environment 201, while not necessarily having details of the user available.

A computer program product is provided comprising instructions which, when the program is executed by a computer, cause the computer to carry out the steps of the method 400.

## Claims

1. A system (100) for tracking interaction with an object (200) in a virtual environment (201), the object (200) being viewable by a user in the virtual environment (201) on a user client device (300), the system (100) comprising
a tracking server (101), and
a controller (102) in communication with the tracking server (101) and the user client device (300) and being configured to generate an identifier (ID) for the object (200),
associate the identifier with an asset record (103) for the object (200) on the tracking server (101), wherein the tracking server (101) is configured to store the asset record (103),
determine events of the user interacting with the object (200) in the virtual environment (201) as interaction events (IE₁, _{..., i}), and
define the interaction events (IE₁, _{..., i}) to be stored in the asset record (103) of the object (200) as the user interacts with the object (200),
wherein, as the user initiates the interaction with the object (200) in the virtual environment (201) on the user client device (300), and subsequently terminates the interaction, the controller (102) is configured to
register a first interaction event (IE₁) with an associated first set of interaction data comprising characteristic, such as a duration between the initiation of the interaction and the termination of interaction and/or a type of manipulation of the object (200) by the user, such as a change in the appearance of the object (200), and
associate the first set of interaction data with the asset record (103) of the object (200) for said tracking in the virtual environment (201).

2. System (100) according to claim 1, wherein the controller (102) is configured to alter a configuration of the object (200) based on the first set of interaction data.

3. System (100) according to claim 2, wherein the controller (102) is configured to alter the configuration of the object (200) by changing the appearance of the object (200) in the virtual environment (201).

4. System (100) according to any of claims 1 - 3, wherein the object (200) is a first object and the controller (102) is configured to alter a configuration of a second object, different from the first object, based on the first set of interaction data.

5. System (100) according to claim 4, wherein the second object has a corresponding second asset record on the tracking server (101) and is linked to first object so that the first set of interaction data is further associated with the second asset record.

6. System (100) according to any of claims 1 - 5, wherein the controller (102) is configured to alter the user's ability to manipulate the object (200) in a GUI of the virtual environment (201) based on the first set of interaction data.

7. System (100) according to any of claims 1 - 6, wherein the user views the object (200) from a viewpoint (202) in the virtual environment (201), the viewpoint (202) being updated with frames of the virtual environment (201) being displayed to the user, wherein the controller (102) is configured to
determine a line of sight (203) to the object (200) in the viewpoint (202) for the frames and an associated set of line of sight coordinates (204) in the viewpoint (202),
define a focus area (205) in a center (206) of the viewpoint (202),
determine a view time by which the line of sight coordinates (204) are positioned at least partly within the focus area (205),
wherein the first set of interaction data comprises said view time so that the view time is associated with the asset record (103) of the object (200).

8. System (100) according to any of claims 1 - 7, wherein the user views the object (200) from a viewpoint (202) in the virtual environment (201), the viewpoint (202) being updated with frames of the virtual environment (201) being displayed to the user, wherein the controller (102) is configured to
determine an observable size of the object (200) in relation to a total viewable area from the viewpoint (202),
wherein the first set of interaction data comprises said observable size so that the observable size is associated with the asset record (103) of the object (200).

9. System (100) according to claim 7 or 8, wherein the controller (102) is configured to alter a configuration of the object (200) based on the view time and/or the observable size.

10. System (100) according to claim 7, wherein the controller (102) is configured to associate the view time with the asset record (103) of the object (200) if a defined time threshold for the view time is met.

11. System (100) according to any of claims 1 - 10, wherein the controller (102) is configured to associate a rule set of the object (200) with the asset record (103) of the object (200),
wherein the rule set defines limitations for exploitation of the object (200) in the virtual environment (201) such as a total display time of the object (200) and/or how the configuration of the object (200) can be altered.

12. System (100) according to claim 11, wherein the rule set defines a limitation for the type of manipulation of the object (200) by the user or a limitation for a duration of the first interaction event (IE₁).

13. System (100) according to any of claims 1 - 12, wherein the controller (102) is configured to retrieve user data of the user and associate the user data with the asset record (103) of the object (200) as the user interacts with the object (200).

14. System (100) according to any of claims 1 - 13, wherein the controller (102) is configured to associate a plurality of interaction events (IE_{1, ..., i}), by one or more users interacting with the object (200), and corresponding sets of interaction data with the asset record (103) of the object (200), and
determine a trend in the type of manipulation of the object (200) in the plurality of interaction events (IE_{1, ..., i}) and/or a trend in a duration of the plurality of interaction events (IE_{1, ..., i}) to determine an object configuration correlating with said trend.

15. A method (400) performed in a system (100) comprising a tracking server (101) and a controller (102) in communication with the tracking server (101) and a user client device (300), for tracking interaction with an object (200) in a virtual environment (201), the object (200) being viewable by a user in the virtual environment (201) on the user client device (300), the method comprising
generating (401), by the controller (102), an identifier (ID) for the object (200),
associating (402), by the controller (102), the identifier with an asset record (103) for the object (200) on the tracking server (101), the tracking server (101) storing the asset record (103) for the object (200),
determining (403), by the controller (102), events of the user interacting with the object (200) in the virtual environment (201) as interaction events (IE_{1, ..., i}),
defining (404), by the controller (102), the interaction events (IE_{1, ..., i}) to be stored in the asset record (103) of the object (200) as the user interacts with the object (200),
wherein, as the user initiates the interaction with the object (200) in the virtual environment (201) on the user client device (300), and subsequently terminates the interaction, the method comprises
registering (405), by the controller (102), a first interaction event (IE₁) with an associated first set of interaction data comprising characteristic, such as a duration between the initiation of the interaction and the termination of interaction and/or a type of manipulation of the object (200) by the user, such as a change in the appearance of the object (200), and
associating (406), by the controller (102), the first set of interaction data with the asset record (103) of the object (200) for said tracking in the virtual environment (201).

## Patentansprüche

1. System (100) zum Verfolgen einer Interaktion mit einem Objekt (200) in einer virtuellen Umgebung (201), wobei das Objekt (200) von einem Benutzer in der virtuellen Umgebung (201) auf einer Benutzer-Client-Vorrichtung (300) betrachtet werden kann, wobei das System (100) umfasst
einen Verfolgungsserver (101), und
eine Steuerung (102) in Kommunikation mit dem Verfolgungsserver (101) und der Benutzer-Client-Vorrichtung (300), die dazu ausgelegt ist eine Kennung (ID) für das Objekt (200) zu erzeugen,
die Kennung mit einem Asset-Datensatz (103) für das Objekt (200) auf dem Verfolgungsserver (101) zu assoziieren, wobei der Verfolgungsserver (101) dazu ausgelegt ist, den Asset-Datensatz (103) zu speichern, Ereignisse des Benutzers, der mit dem Objekt (200) in der virtuellen Umgebung (201) interagiert, als Interaktionsereignisse (IE₁, _{...}, ᵢ) zu bestimmen, und die Interaktionsereignisse (IE₁, _{...}, ᵢ) zu definieren, die im Asset-Datensatz (103) des Objekts (200) gespeichert werden sollen, während der Benutzer mit dem Objekt (200) interagiert,
wobei, während der Benutzer die Interaktion mit dem Objekt (200) in der virtuellen Umgebung (201) auf der Benutzer-Client-Vorrichtung (300) initiiert und anschließend die Interaktion beendet, die Steuerung (102) dazu ausgelegt ist
ein erstes Interaktionsereignis (IE₁) mit einem assoziierten ersten Satz von Interaktionsdaten, der eine Charakteristik umfasst, zu registrieren, wie etwa eine Dauer zwischen dem Initiieren der Interaktion und dem Beenden der Interaktion und/oder eine Art von Manipulation des Objekts (200) durch den Benutzer, wie etwa eine Änderung des Erscheinungsbilds des Objekts (200), und
den ersten Satz von Interaktionsdaten mit dem Asset-Datensatz (103) des Objekts (200) für das Verfolgen in der virtuellen Umgebung (201) zu assoziieren.

2. System (100) nach Anspruch 1, wobei die Steuerung (102) dazu ausgelegt ist, eine Konfiguration des Objekts (200) basierend auf dem ersten Satz von Interaktionsdaten zu ändern.

3. System (100) nach Anspruch 2, wobei die Steuerung (102) dazu ausgelegt ist, die Konfiguration des Objekts (200) durch Ändern des Erscheinungsbilds des Objekts (200) in der virtuellen Umgebung (201) zu ändern.

4. System (100) nach einem der Ansprüche 1 bis 3, wobei das Objekt (200) ein erstes Objekt ist und die Steuerung (102) dazu ausgelegt ist, eine Konfiguration eines zweiten Objekts, das sich von dem ersten Objekt unterscheidet, basierend auf dem ersten Satz von Interaktionsdaten zu ändern.

5. System (100) nach Anspruch 4, wobei das zweite Objekt einen entsprechenden zweiten Asset-Datensatz auf dem Verfolgungsserver (101) aufweist und mit dem ersten Objekt verknüpft ist, so dass der erste Satz von Interaktionsdaten ferner mit dem zweiten Asset-Datensatz assoziiert ist.

6. System (100) nach einem der Ansprüche 1 bis 5, wobei die Steuerung (102) dazu ausgelegt ist, die Fähigkeit des Benutzers, das Objekt (200) in einer GUI der virtuellen Umgebung (201) zu manipulieren, basierend auf dem ersten Satz von Interaktionsdaten zu ändern.

7. System (100) nach einem der Ansprüche 1 bis 6, wobei der Benutzer das Objekt (200) von einem Blickpunkt (202) in der virtuellen Umgebung (201) betrachtet, wobei der Blickpunkt (202) mit Frames der virtuellen Umgebung (201) aktualisiert wird, die dem Benutzer angezeigt werden, wobei die Steuerung (102) dazu ausgelegt ist eine Sichtlinie (203) zu dem Objekt (200) in dem Blickpunkt (202) für die Frames und einen assoziierten Satz von Sichtlinienkoordinaten (204) in dem Blickpunkt (202) zu bestimmen,
einen Fokusbereich (205) in einer Mitte (206) des Blickpunkts (202) zu definieren,
eine Betrachtungszeit zu bestimmen, bei der die Sichtlinienkoordinaten (204) zumindest teilweise innerhalb des Fokusbereichs (205) positioniert sind, wobei der erste Satz von Interaktionsdaten die Betrachtungszeit umfasst, so dass die Betrachtungszeit mit dem Asset-Datensatz (103) des Objekts (200) assoziiert ist.

8. System (100) nach einem der Ansprüche 1 bis 7, wobei der Benutzer das Objekt (200) von einem Blickpunkt (202) in der virtuellen Umgebung (201) betrachtet, wobei der Blickpunkt (202) mit Frames der virtuellen Umgebung (201) aktualisiert wird, die dem Benutzer angezeigt werden, wobei die Steuerung (102) dazu ausgelegt ist
eine beobachtbare Größe des Objekts (200) in Bezug auf einen gesamten betrachtbaren Bereich aus dem Blickpunkt (202) zu bestimmen,
wobei der erste Satz von Interaktionsdaten die beobachtbare Größe umfasst, so dass die beobachtbare Größe mit dem Asset-Datensatz (103) des Objekts (200) assoziiert ist.

9. System (100) nach Anspruch 7 oder 8, wobei die Steuerung (102) dazu ausgelegt ist, eine Konfiguration des Objekts (200) basierend auf der Betrachtungszeit und/oder der beobachtbaren Größe zu ändern.

10. System (100) nach Anspruch 7, wobei die Steuerung (102) dazu ausgelegt ist, die Betrachtungszeit mit dem Asset-Datensatz (103) des Objekts (200) zu assoziieren, wenn eine definierte Zeitschwelle für die Betrachtungszeit erfüllt ist.

11. System (100) nach einem der Ansprüche 1 bis 10, wobei die Steuerung (102) dazu ausgelegt ist, einen Regelsatz des Objekts (200) mit dem Asset-Datensatz (103) des Objekts (200) zu assoziieren,
wobei der Regelsatz Einschränkungen für die Nutzung des Objekts (200) in der virtuellen Umgebung (201) definiert, wie etwa eine Gesamtanzeigezeit des Objekts (200) und/oder wie die Konfiguration des Objekts (200) geändert werden kann.

12. System (100) nach Anspruch 11, wobei der Regelsatz eine Beschränkung für die Art der Manipulation des Objekts (200) durch den Benutzer oder eine Beschränkung für eine Dauer des ersten Interaktionsereignisses (IE₁) definiert.

13. System (100) nach einem der Ansprüche 1 bis 12, wobei die Steuerung (102) dazu ausgelegt ist, Benutzerdaten des Benutzers abzurufen und die Benutzerdaten mit dem Asset-Datensatz (103) des Objekts (200) zu assoziieren, während der Benutzer mit dem Objekt (200) interagiert.

14. System (100) nach einem der Ansprüche 1 bis 13, wobei die Steuerung (102) dazu ausgelegt ist, eine Mehrzahl von Interaktionsereignissen (IE₁, _{...}, ᵢ) durch einen oder mehrere Benutzer, die mit dem Objekt (200) interagieren, und entsprechende Sätze von Interaktionsdaten mit dem Asset-Datensatz (103) des Objekts (200) zu assoziieren, und
einen Trend in der Art der Manipulation des Objekts (200) in der Mehrzahl von Interaktionsereignissen (IE₁, _{...}, ᵢ) und/oder einen Trend in einer Dauer der Mehrzahl von Interaktionsereignissen (IE₁, _{...}, ᵢ) zu bestimmen, um eine Objektkonfiguration zu bestimmen, die mit dem Trend korreliert.

15. Verfahren (400), das in einem System (100) durchgeführt wird, das einen Verfolgungsserver (101) und eine Steuerung (102) in Kommunikation mit dem Verfolgungsserver (101) und einer Benutzerclientvorrichtung (300) zum Verfolgen einer Interaktion mit einem Objekt (200) in einer virtuellen Umgebung (201) umfasst, wobei das Objekt (200) durch einen Benutzer in der virtuellen Umgebung (201) auf der Benutzerclientvorrichtung (300) betrachtbar ist, wobei das Verfahren umfasst
Erzeugen (401), durch die Steuerung (102), einer Kennung (ID) für das Objekt (200),
Assoziieren (402), durch die Steuerung (102), der Kennung mit einem Asset-Datensatz (103) für das Objekt (200) auf dem Verfolgungsserver (101), wobei der Verfolgungsserver (101) den Asset-Datensatz (103) für das Objekt (200) speichert,
Bestimmen (403), durch die Steuerung (102), von Ereignissen des Benutzers, die mit dem Objekt (200) in der virtuellen Umgebung (201) interagieren, als Interaktionsereignisse (IE₁, _{...}, ᵢ),
Definieren (404), durch die Steuerung (102), der Interaktionsereignisse (IE₁, _{...}, ᵢ), die in dem Asset-Datensatz (103) des Objekts (200) zu speichern sind, während der Benutzer mit dem Objekt (200) interagiert, wobei, während der Benutzer die Interaktion mit dem Objekt (200) in der virtuellen Umgebung (201) auf der Benutzer-Client-Vorrichtung (300) initiiert und anschließend die Interaktion beendet, das Verfahren umfasst
Registrieren (405), durch die Steuerung (102), eines ersten Interaktionsereignisses (IE₁) mit einem assoziierten ersten Satz von Interaktionsdaten, der Charakteristik umfasst, wie etwa eine Dauer zwischen dem Initiieren der Interaktion und dem Beenden der Interaktion und/oder eine Art von Manipulation des Objekts (200) durch den Benutzer, wie etwa eine Änderung des Erscheinungsbilds des Objekts (200), und Assoziieren (406), durch die Steuerung (102), des ersten Satzes von Interaktionsdaten mit dem Asset-Datensatz (103) des Objekts (200) für das Verfolgen in der virtuellen Umgebung (201).

## Revendications

1. Système (100) de suivi d'interaction avec un objet (200) dans un environnement virtuel (201), l'objet (200) pouvant être visualisé par un utilisateur dans l'environnement virtuel (201) sur un dispositif client (300) d'utilisateur, le système (100) comprenant un serveur (101) de suivi, et
un moyen (102) de commande en communication avec le serveur (101) de suivi et le dispositif client (300) d'utilisateur et configuré pour
générer un identifiant (ID) pour l'objet (200), associer l'identifiant à un enregistrement (103) d'actif pour l'objet (200) sur le serveur (101) de suivi, le serveur (101) de suivi étant configuré pour stocker l'enregistrement (103) d'actif,
déterminer des événements d'interaction de l'utilisateur avec l'objet (200) dans l'environnement virtuel (201) en tant qu'événements d'interaction (IE₁, ..., i), et
définir les événements d'interaction (IE₁, ..., i) à stocker dans l'enregistrement (103) d'actif de l'objet (200) tandis que l'utilisateur interagit avec l'objet (200), le moyen (102) de commande étant configuré, lorsque l'utilisateur lance l'interaction avec l'objet (200) dans l'environnement virtuel (201) sur le dispositif client (300) d'utilisateur, et met ensuite fin à l'interaction, pour
enregistrer un premier événement d'interaction (IE₁) avec un premier ensemble associé de données d'interaction comprenant des caractéristiques, telles qu'une durée entre le lancement de l'interaction et l'arrêt de l'interaction et/ou un type de manipulation de l'objet (200) par l'utilisateur, tel qu'un changement d'aspect de l'objet (200), et
associer le premier ensemble de données d'interaction à l'enregistrement (103) d'actif de l'objet (200) pour ledit suivi dans l'environnement virtuel (201).

2. Système (100) selon la revendication 1, le moyen (102) de commande étant configuré pour modifier une configuration de l'objet (200) sur la base du premier ensemble de données d'interaction.

3. Système (100) selon la revendication 2, le moyen (102) de commande étant configuré pour modifier la configuration de l'objet (200) en changeant l'aspect de l'objet (200) dans l'environnement virtuel (201).

4. Système (100) selon l'une quelconque des revendications 1 à 3, l'objet (200) étant un premier objet et le moyen (102) de commande étant configuré pour modifier une configuration d'un second objet, différent du premier objet, sur la base du premier ensemble de données d'interaction.

5. Système (100) selon la revendication 4, le second objet possédant un second enregistrement d'actif correspondant sur le serveur (101) de suivi et étant lié au premier objet de sorte que le premier ensemble de données d'interaction est en outre associé au second enregistrement d'actif.

6. Système (100) selon l'une quelconque des revendications 1 à 5, le moyen (102) de commande étant configuré pour modifier la capacité de l'utilisateur à manipuler l'objet (200) dans une GUI de l'environnement virtuel (201) sur la base du premier ensemble de données d'interaction.

7. Système (100) selon l'une quelconque des revendications 1 à 6, l'utilisateur visualisant l'objet (200) depuis un point de vue (202) dans l'environnement virtuel (201), le point de vue (202) étant mis à jour avec des trames de l'environnement virtuel (201) présentées à l'utilisateur, le moyen (102) de commande étant configuré pour
déterminer une ligne de visée (203) jusqu'à l'objet (200) dans le point de vue (202) pour les trames et un ensemble associé de coordonnées (204) de ligne de visée dans le point de vue (202),
définir une zone (205) de focalisation dans un centre (206) du point de vue (202),
déterminer un temps de visualisation à l'échéance duquel les coordonnées (204) de ligne de visée sont positionnées au moins en partie à l'intérieur de la zone (205) de focalisation,
le premier ensemble de données d'interaction comprenant ledit temps de visualisation de sorte que le temps de visualisation est associé à l'enregistrement (103) d'actif de l'objet (200).

8. Système (100) selon l'une quelconque des revendications 1 à 7, l'utilisateur visualisant l'objet (200) depuis un point de vue (202) dans l'environnement virtuel (201), le point de vue (202) étant mis à jour avec des trames de l'environnement virtuel (201) présentées à l'utilisateur, le moyen (102) de commande étant configuré pour
déterminer une taille observable de l'objet (200) par rapport à une zone visualisable totale à partir du point de vue (202),
le premier ensemble de données d'interaction comprenant ladite taille observable de sorte que la taille observable est associée à l'enregistrement (103) d'actif de l'objet (200).

9. Système (100) selon la revendication 7 ou 8, le moyen (102) de commande étant configuré pour modifier une configuration de l'objet (200) sur la base du temps de visualisation et/ou de la taille observable.

10. Système (100) selon la revendication 7, le moyen (102) de commande étant configuré pour associer le temps de visualisation à l'enregistrement (103) d'actif de l'objet (200) si un seuil de temps défini pour le temps de visualisation est atteint.

11. Système (100) selon l'une quelconque des revendications 1 à 10, le moyen (102) de commande étant configuré pour associer un ensemble de règles de l'objet (200) à l'enregistrement (103) d'actif de l'objet (200), l'ensemble de règles définissant des limitations pour l'exploitation de l'objet (200) dans l'environnement virtuel (201), telles qu'un temps d'affichage total de l'objet (200) et/ou la manière dont la configuration de l'objet (200) peut être modifiée.

12. Système (100) selon la revendication 11, l'ensemble de règles définissant une limitation pour le type de manipulation de l'objet (200) par l'utilisateur ou une limitation pour une durée du premier événement d'interaction (IE₁).

13. Système (100) selon l'une quelconque des revendications 1 à 12, le moyen (102) de commande étant configuré pour récupérer des données d'utilisateur de l'utilisateur et associer les données d'utilisateur à l'enregistrement (103) d'actif de l'objet (200) tandis que l'utilisateur interagit avec l'objet (200).

14. Système (100) selon l'une quelconque des revendications 1 à 13, le moyen (102) de commande étant configuré pour associer une pluralité d'événements d'interaction (IE₁, _{...}, ᵢ), par un ou plusieurs utilisateurs interagissant avec l'objet (200), et des ensembles correspondants de données d'interaction à l'enregistrement (103) d'actif de l'objet (200), et déterminer une tendance dans le type de manipulation de l'objet (200) lors de la pluralité d'événements d'interaction (IE₁, _{...}, i) et/ou une tendance dans une durée de la pluralité d'événements d'interaction (IE₁, ..., ᵢ) pour déterminer une configuration d'objet se corrélant avec ladite tendance.

15. Procédé (400) mis en œuvre dans un système (100) comprenant un serveur (101) de suivi et un moyen (102) de commande en communication avec le serveur (101) de suivi et un dispositif client (300) d'utilisateur, pour suivre une interaction avec un objet (200) dans un environnement virtuel (201), l'objet (200) pouvant être visualisé par un utilisateur dans l'environnement virtuel (201) sur le dispositif client (300) d'utilisateur, le procédé comprenant
la génération (401) par le moyen (102) de commande, d'un identifiant (ID) pour l'objet (200),
l'association (402), par le moyen (102) de commande, de l'identifiant à un enregistrement (103) d'actif pour l'objet (200) sur le serveur (101) de suivi, le serveur (101) de suivi stockant l'enregistrement (103) d'actif pour l'objet (200),
la détermination (403), par le moyen (102) de commande, d'événements d'interaction de l'utilisateur avec l'objet (200) dans l'environnement virtuel (201) comme des événements d'interaction (IE₁, _{...}, ᵢ),
la définition (404), par le moyen (102) de commande, des événements d'interaction (IE₁, _{...}, ᵢ) à stocker dans l'enregistrement (103) d'actif de l'objet (200) tandis que l'utilisateur interagit avec l'objet (200),
le procédé comprenant , lorsque l'utilisateur lance l'interaction avec l'objet (200) dans l'environnement virtuel (201) sur le dispositif client (300) d'utilisateur, et met ensuite fin à l'interaction, l'enregistrement (405) par le moyen (102) de commande, d'un premier événement d'interaction (IE₁) avec un premier ensemble associé de données d'interaction comprenant une caractéristique, telle qu'une durée entre le lancement de l'interaction et l'arrêt de l'interaction et/ou un type de manipulation de l'objet (200) par l'utilisateur, tel qu'un changement d'aspect de l'objet (200), et
l'association (406), par le moyen (102) de commande, du premier ensemble de données d'interaction à l'enregistrement (103) d'actif de l'objet (200) pour ledit suivi dans l'environnement virtuel (201).
